# EUROPEAN PATENT APPLICATION

(11) **EP 4 723 538 A1**
(43) Date of publication of application: **08.04.2026**
(21) Application number: 24306613.1
(22) Date of filing: 01.10.2024
(51) Int. Cl.: H04L 9/00, H04L 9/30

(54) **METHOD FOR SECURING MODULAR EXPONENTIATION OR POINT MULTIPLICATION OPERATIONS AGAINST SIDE-CHANNEL ATTACKS**

(71) Applicant: THALES DIS FRANCE SAS, 92190 Meudon (FR)
(72) Inventor: TEGLIA, Yannick, 13720 BELCODENE (FR); VIGILANT, David, 92240 MALAKOFF (FR); ROUSSELLET, Mylène, 13119 Saint Savournin (FR)
(74) Representative: Bricks, Amélie

(57) **Abstract**

The present invention relates to a method for securing against side channel attacks an execution of a cryptographic process comprising either:
- an elliptic curve scalar multiplication operation of a secret key k with a first point P of an elliptic curve, thereby computing a scalar multiplication operation result Q = k.P, with k a scalar, or
- a modular exponentiation operation of a base P, which is a first positive integer number, with a secret key k, k being an integer, computing a modular exponentiation operation result Q = P^{k} mod m.

The main idea of the invention is to store pre-computed results of an ECC scalar multiplication Si=si.P or of an exponentiation Si= P^{si} mod m and then, for computing a target result of a scalar multiplication k.P or of an exponentiation P^{k} mod m, to compute the difference between the target result and a pre-computed result (k-s).P or P^{k-s}. The target result can then be easily obtained by combining the pre-computed result and the computed difference.

## Description

### FIELD OF THE INVENTION

The present invention relates to the field of cryptography, and more particularly to a method for securing against side-channel attacks modular exponentiation operations, or point multiplication operations performed in elliptic curve cryptographic processes.

### BACKGROUND OF THE INVENTION

Cryptographic algorithms are commonly used for ensuring the privacy of communications by encryption, for authentication or for generating a verifiable signature. Examples of such algorithms are AES or ECDSA.

Such cryptographic algorithms are sensitive to side-channel attacks (SCA), based on an analysis of the power consumption or electromagnetic signature of the device performing the encryption. Indeed SCA may be used to retrieve at least a part of a secret private key d when used in a cryptographic operations as exponent of a modular exponentiation, or when used in the frame of an Elliptic curve cryptography (ECC) protocol, such as ECDSA, for deriving a new point of an elliptic curve by performing a scalar multiplication.

Implementations of modular exponentiation, or scalar multiplication in the case of ECC, have been proposed which provide some protection against SCA such as additive or multiplicative splitting according to which the computation of a single modular exponentiation or scalar multiplication is broken down into several ones which are then combined by multiplying or adding them all together. Nevertheless, such protections do not protect against horizontal SCA attacks in which all the sensitive information is extracted from several parts of a single measurement.

Blinding methods have been proposed, in which the secret key d is protected by masking it with a random value Rand, in a way enabling to perform a scalar multiplication or a modular exponentiation using the masked secret key instead of the secret key itself, and then to remove the masking or its effects from the result, in order to retrieve the correct result of the operation as if the secret key d itself had been used.

Nevertheless, existing blinding methods have several drawbacks. A first one is the high performance penalty incurred to cryptographic operations using blinding secret keys. In addition, even if an attacker cannot retrieve the secret key itself because only a blinded secret key is used to perform a scalar multiplication or a modular exponentiation, retrieving a blinded key by SCA may enable an attacker to forge valid ciphertexts or signatures.

As a result, there is a need for a method securing modular exponentiation or ECC scalar multiplication processes against horizontal side channel attacks and which do not enable an attacker to successfully forge a valid ciphertext or signature from the information obtained by performing SCA on such a process.

### SUMMARY OF THE INVENTION

For this purpose and according to a first aspect, this invention therefore relates to a method for securing against side channel attacks an execution of a cryptographic process comprising an elliptic curve scalar multiplication operation of a secret key k with a first point P of an elliptic curve computing a scalar multiplication operation result Q = k.P in an electronic device, with k a scalar, said method being performed by said electronic device comprising a processing system and a memory storing at least one pre-computed point of said elliptic curve (S1, ..., Sn) such that Si=si.P, si a scalar, and comprising, when said cryptographic process is executed, for computing securely said scalar multiplication operation result Q = k.P :
- obtaining, from said at least one stored pre-computed point of said elliptic curve (S1, ..., Sn), a second point of said elliptic curve S such that S=s.P with s a first scalar,
- computing, via said processing system, a second scalar r by subtracting said first scalar s from said secret key k,
- computing, via said processing system, a third point of said elliptic curve R by multiplying said computed second scalar r with said first point P such that: R = r.P,
- performing, via said processing system, a point addition of said obtained second point S and said computed third point R to obtain the scalar multiplication operation result Q = k.P and,
- performing, via said processing system, said cryptographic process using said obtained scalar multiplication operation result.

Said at least one pre-computed point of said elliptic curve (S1, ..., Sn) may be random and specific to the electronic device.

According to a second aspect, this invention therefore relates also to a method for securing against side channel attacks an execution of a cryptographic process comprising a modular exponentiation operation of a base P with a secret key k modulo a value m computing a modular exponentiation operation result Q = P^{k} mod m in an electronic device, k being an integer , P being a first positive integer number, said method being performed by said electronic device comprising a processing system and a memory storing at least one pre-computed positive integer number (S1, ..., Sn) such that Si= P^{si} mod m, si an integer, and comprising, when said cryptographic process is executed, for computing securely said modular exponentiation operation result Q:
- obtaining, from said at least one stored pre-computed positive integer number (S1, ..., Sn), a second positive integer number S such that S= P^{s} mod m with s a first integer,
- computing, via said processing system, a second integer r by subtracting said first integer s from said secret key k (r = k-s mod phi(m)), where phi is Euler's totient function,
- computing, via said processing system, a third positive integer number R by performing a modular exponentiation of said first positive integer number P with said computed second integer r with such that: R = P^{r} mod m,
- performing, via said processing system, a modular multiplication of said obtained second positive integer number S and said computed third positive integer number R to obtain the modular exponentiation operation result Q = P^{k} mod m and,
- performing, via said processing system, said cryptographic process using said obtained modular exponentiation operation result.

Said at least one pre-computed positive integer number (S1, ..., Sn) may be random and specific to the electronic device.

According to an embodiment, obtaining said second point may comprise combining linearly a plurality of pre-computed points of said elliptic curve using random coefficients.

According to an embodiment, obtaining said second positive integer number may comprise multiplying a plurality of pre-computed positive integer numbers, each exponentiated by a random coefficient.

Said used random coefficients may be multiples of two.

Said cryptographic process may be among Signature (for instance ECDSA or DSA), key generation, and key Exchange.

According to a third aspect, this invention therefore relates also to a computer program product directly loadable into the memory of at least one computer, comprising software code instructions for performing the steps of the methods according to the first aspect or the second aspect when said product is run on the computer.

According to a fourth aspect, this invention therefore relates also to a non-transitory computer readable medium adapted to store one or more instructions for securing against side channel attacks an execution of a cryptographic process comprising an elliptic curve scalar multiplication operation of a secret key k with a first point P of an elliptic curve computing a scalar multiplication operation result Q = k.P, with k a scalar, in an electronic device comprising a processing system and a memory storing at least one pre-computed point of said elliptic curve (S1, ..., Sn) such that Si=si.P, si a scalar, the instructions which when executed by said processing system for computing securely said scalar multiplication operation result Q = k.P cause the processing system to :
- obtain, from said at least one stored pre-computed point of said elliptic curve (S1, ..., Sn), a second point of said elliptic curve S such that S=s.P with s a first scalar,
- compute a second scalar r by subtracting said first scalar s from said secret key k,
- compute a third point of said elliptic curve R by multiplying said computed second scalar r with said first point P such that: R = r.P,
- perform a point addition of said obtained second point S and said computed third point R to obtain the scalar multiplication operation result Q = k.P and,
- perform said cryptographic process using said obtained scalar multiplication operation result.

According to a fifth aspect, this invention therefore relates also to a non-transitory computer readable medium adapted to store one or more instructions for securing against side channel attacks an execution of a cryptographic process comprising a modular exponentiation operation of a base P with a secret key k modulo a value m computing a modular exponentiation operation result Q = P^{k} mod m in an electronic device, k being an integer, P being a first positive integer number, in an electronic device comprising a processing system and a memory storing at least one pre-computed positive integer number (S1, ..., Sn) such that Si= P^{si} mod m, si an integer, the instructions which when executed by said processing system for computing securely said modular exponentiation operation result Q cause the processing system to :
- obtain, from said at least one stored pre-computed positive integer number (S1, ..., Sn), a second positive integer number (S) such that S= P^{s} mod m with s a first integer,
- compute a second integer r by subtracting said first integer s from said secret key k (r = k-s mod phi(m)), where phi is the Euler's totient function,
- compute a third positive integer number R by performing a modular exponentiation of said first positive integer number P with said computed second integer r with such that: R = P^{r} mod m,
- perform a modular multiplication of said obtained second positive integer number S and said computed third positive integer number R to obtain the modular exponentiation operation result Q = P^{k} mod m and,
- perform said cryptographic process using said obtained modular exponentiation operation result.

According to a sixth aspect, this invention therefore relates also to an electronic device for securing against side channel attacks an execution of a cryptographic process comprising an elliptic curve scalar multiplication operation of a secret key k with a first point P of an elliptic curve computing a scalar multiplication operation result Q = k.P, with k a scalar,
comprising:
- a memory storing at least one pre-computed point of said elliptic curve (S1, ..., Sn) such that Si=si.P with si a scalar,
- a processing system communicatively coupled to the memory adapted to compute securely said scalar multiplication operation result Q = k.P, when said cryptographic process is executed, by :
   o obtaining a second point of said elliptic curve S such that S=s.P with s a first scalar from said at least one stored pre-computed point of said elliptic curve (S1, ..., Sn),
   o computing a second scalar r by subtracting said first scalar s from said secret key k,
   o computing a third point of said elliptic curve R by multiplying said computed second scalar r with said first point P such that: R = r.P,
   o performing a point addition of said obtained second point S and said computed third point R to obtain the scalar multiplication operation result Q = k.P and,
   o performing said cryptographic process using said obtained scalar multiplication operation result.

According to a seventh aspect, this invention therefore relates also to an electronic device for securing against side channel attacks an execution of a cryptographic process comprising a modular exponentiation operation of a base P with a secret key k modulo a value m computing a modular exponentiation operation result Q = P^{k} mod m, with k an integer, comprising :
- a memory storing at least one pre-computed positive integer number (S1, ..., Sn) such that Si= P^{si} mod m, si an integer,
- a processing system communicatively coupled to the memory adapted to compute securely said modular exponentiation operation result Q, when said cryptographic process is executed, by :
   ∘ obtaining, from said at least one stored pre-computed positive integer number (S1, ..., Sn), a second positive integer number S such that S= P^{s} mod m with s a first integer,
   ∘ computing a second integer r by subtracting said first integer s from said secret key k (r = k-s modphi(m)), where phi is the Euler's totient function,
   ∘ computing a third positive integer number R by performing a modular exponentiation of said first positive integer number P with said computed second integer r with such that: R = P^{r} mod m,
   ∘ performing a modular multiplication of said obtained second positive integer number S and said computed third positive integer number R to obtain the modular exponentiation operation result Q = P^{k} mod m and,
   ∘ performing said cryptographic process using said obtained modular exponentiation operation result.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 is a schematic illustration of an electronic device according to an embodiment of the present invention;
- Figure 2 illustrates schematically a method according to an embodiment of the present invention securely computing an elliptic curve scalar multiplication operation Q = k.P;
- Figure 3 illustrates schematically a method according to an embodiment of the present invention securely computing a modular exponentiation operation of a base P with a secret key k Q = P^{k} mod m.

### DETAILED DESCRIPTION OF EMBODIMENTS OF THE INVENTION

The invention aims at securing against side channel attacks an execution of a cryptographic process comprising either:
- an elliptic curve scalar multiplication operation of a secret key k with a first point P of an elliptic curve, thereby computing a scalar multiplication operation result Q = k.P, with k a scalar, or
- a modular exponentiation operation of a base P, which is a first positive integer number, with a secret key k, k being an integer, computing a modular exponentiation operation result Q = P^{k} mod m.

In the method according to the invention, multiplication of an elliptic curve point by a scalar and modular exponentiation of an integer by an integer play a symmetric role, depending on whether the invention is applied to ECC or not. In general, the description below stands for the two cases. Some paragraphs will provide details for a specific case, as specified below.

The cryptographic process to be protected may for example be sensitive data encryption using an algorithm such as RSA or the generation of a signature, for example using DSA or ECDSA algorithm, or a key exchange process.

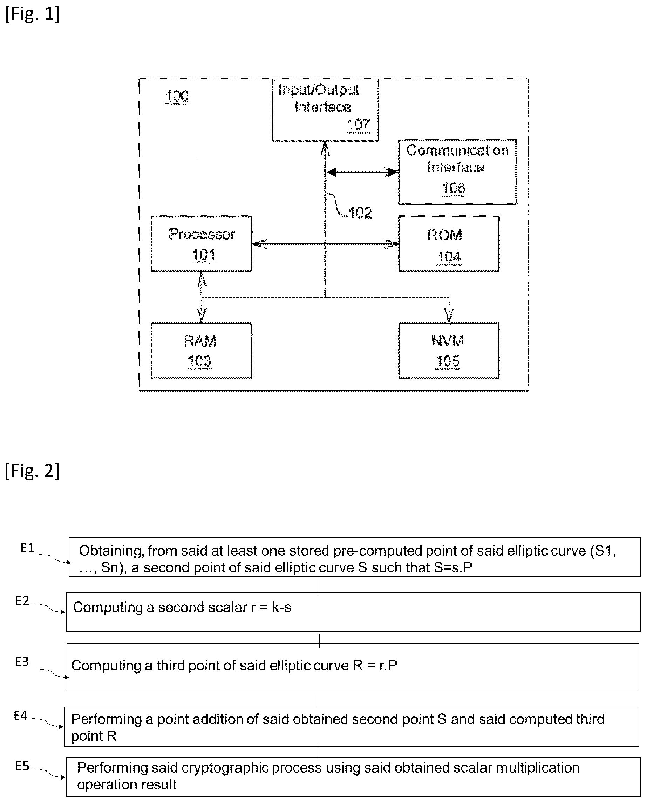

Such a process may be performed by an electronic device 100 a schematic illustration of which is given on **Figure 1****.** The electronic device 100 may include a processor 101 connected via a bus 102 to a random-access memory (RAM) 103, a read-only memory (ROM) 104, and/or a non-volatile memory (NVM) 105. The electronic device 100 may further include a communication interface 106 by which the electronic device 100 may be connected to a network. Such an interface may be a wireless interface connected to an antenna and may be used to connect the electronic device 100 to various forms of wireless networks, e.g., wide-area networks, WiFi networks, or mobile telephony networks. Alternatively, such an interface may be a wired interface such as an Ethernet internet. The electronic device 100 may also include input/output means 107 providing interfaces to the user of the electronic device 100, such as one or more screens, loudspeakers, a mouse, tactile surfaces, a keyboard etc...

Such an electronic device may for example be a smartcard, a mobile telephone, a tablet, or a personal computer. It may also be a smartchip embedded in an identity document such as a passport, or a Hardware Security Module (HSM).

The main idea of the invention is to store pre-computed results of an ECC scalar multiplication Si=si.P or of an exponentiation Si= P^{si} mod m and then, for computing a target result of a scalar multiplication k.P or of an exponentiation P^{k} mod m, to compute the difference between the target result and a pre-computed result (k-s).P or P^{k-s}. The target result can then be easily obtained by combining the pre-computed result and the computed difference.

By doing so, the scalar multiplication k.P or exponentiation P^{k} mod m using the secret key is never directly computed and only the scalar multiplication (k-s).P or the exponentiation P^{k-s} is computed. If an attacker performs a SCA on this computation, he will only retrieve the value k-s which gives no information on the secret key k since the attacker has no knowledge of the value s used for the pre-computation.

The following paragraphs describe with more details the steps of a method according to the invention securely computing an elliptic curve scalar multiplication operation Q = k.P, as depicted on **Figure 2****.**

Subsequent paragraphs will describe with more details the steps of the method according to the invention securely computing a modular exponentiation operation of a base P with a secret key k Q = P^{k} mod m.

In the following paragraphs describing the method in the case of ECC, P is a first point of an elliptic curve over a finite field defined by parameters (F, E, G, N) together with the point addition law where F is a field over which is defined the curve, E is an equation of the curve, G is a base point in E over F and N is the order of the base point G. The electronic device stores in one of its memories at least one pre-computed point S1, ..., Sn of the elliptic curve E. These pre-computed points are such that Si=si.P, with i an integer and si a scalar. They may be random. They also may be specific to the electronic device and may differ from one electronic device performing the method according to the invention to another, in order to prevent attacks based on deep learning using supervised learning. They are preferably generated in a secure environment. For example, they may be generated prior to the delivery of the electronic device to a client and its exposure to attacks. Alternatively, they may be generated by a trusted third party and transmitted to the electronic device. The scalars si are also stored in a memory of the electronic device, such that this storage is secure.

In a first step E1, the electronic device obtains from the at least one stored pre-computed point of said elliptic curve S1, ..., Sn, a second point S of the elliptic curve such that S=s.P with s a first scalar. The first scalar s has preferably the same size as the secret key k, to ensure that all the bits of k-s may be different from the corresponding bit of k.

In a first embodiment, the electronic device may draw one pre-computed point among the stored pre-computed points.

Alternatively, the electronic device may obtain the second point S by computing it from the pre-computed points. For example, the electronic device may perform a linear combination of a plurality of precomputed points. Such a linear combination may use random coefficients for each of the combined precomputed points. By doing so, storing only t precomputed points enable to generate 2^{t} different second points S.

In order to minimize the computational cost of computing the second point S from pre-computed points by using random coefficients only requiring point doubling, such as small multiples of two, for example smaller than 16. For example, the second point S may be computed as S=2*S0+2*S7+S8+8*S22+4*S31.

In a second step E2, the electronic device computes via its processing system, a second scalar r by subtracting the first scalar s, obtained at the first step E1, from the secret key k: r = k-s mod N. This second scalar r is the complement to the first scalar s to get the secret key k. This subtraction operation is a short operation performed by the processing system of the electronic device which has a much shorter execution time than a full ECC scalar multiplication operation. Therefore, it generates much lower leakage that an attacker could capture by a SCA.

In a third step E3, the electronic device computes a third point R of the elliptic curve by multiplying the computed second scalar r with the first point P such that: R = r.P. Even if an attacker retrieves the value of the second scalar by a SCA, he will not get any information about the secret key k since r can be seen as a random value.

In a fourth step E4, the electronic device performs a point addition of the obtained second point S and the computed third point R to obtain the scalar multiplication operation result Q = k.P. Indeed, S+ R = s.P + r.P = (s+r).P = (s+k-s).P = k.P. As in the second step, this addition operation is a short operation performed by the processing system of the electronic device which has a much shorter execution time than a full ECC scalar multiplication operation. Therefore, it generates much lower leakage that an attacker could capture by a SCA. And even if an attacker successfully retrieved S and/or R, he would not get the knowledge of the secret key k.

Finally, in a fifth step E5, the electronic device performs the cryptographic process using the scalar multiplication operation result Q.

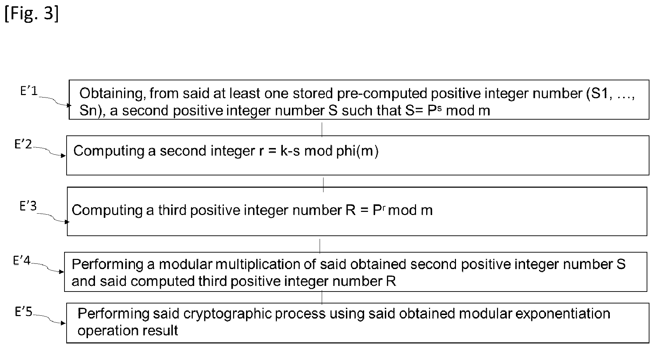

The following paragraphs will now describe with more details the steps of a method according to the invention securely computing a modular exponentiation operation of a base P with a secret key k Q = P^{k} mod m, as depicted on **Figure 3****.**

In the following paragraphs describing the method in the case of modular exponentiation, P is a first positive integer number, also called base. The electronic device stores in one of its memories at least one pre-computed positive integer number S1, ..., Sn. These pre-computed integers are such that Si=P^{si} mod m, with i an integer and si an integer. They may be random. They also may be specific to the electronic device and may differ from one electronic device performing the method according to the invention to another, in order to prevent attacks based on deep learning using supervised learning. They are preferably generated in a secure environment. For example, they may be generated prior to the delivery of the electronic device to a client and its exposure to attacks. Alternatively, they may be generated by a trusted third party and transmitted to the electronic device.

In a first step E'1, the electronic device obtains from the at least one stored pre-computed positive integer number S1, ..., Sn, a second positive integer number S such that S=P^{s} mod m with s a first integer. The first integer s has preferably the same size as the secret key k, to ensure that all the bits of k-s may be different from the corresponding bit of k.

In a first embodiment, the electronic device may draw one pre-computed positive integer number among the stored pre-computed positive integer number.

Alternatively, the electronic device may obtain the second positive integer number S by computing it from the pre-computed positive integer number. For example, the electronic device may perform a combination of a plurality of precomputed positive integer numbers by multiplying a plurality of pre-computed positive integer numbers, after each of them has been exponentiated by a random coefficient, such that the result is the base P exponentiated by a linear combination of the exponents of the combined precomputed numbers. Such a combination may use random coefficients for each of the combined precomputed positive integer numbers. By doing so, storing only t precomputed numbers enable to generate 2^{t} different second positive integer number S.

In order to minimize the computational cost of computing the second positive integer number S from pre-computed positive integer numbers by using random coefficients Ci only requiring modular square operations to compute Si^{Ci} , such as small multiples of two, for example smaller than 16. For example, the second point S may be computed as S=S0²*S7²*S8*S22⁸*S31⁴.

In a second step E'2, the electronic device computes via its processing system, a second integer r by subtracting the first integer s, obtained at the first step E'1, from the secret key k: r = k-s mod phi(m), where phi is Euler's totient function. This second integer r is the complement to the first integer s to get the secret key k. This subtraction operation is a short operation performed by the processing system of the electronic device which has a much shorter execution time than a full modular exponentiation operation. Therefore, it generates much lower leakage that an attacker could capture by a SCA.

In a third step E'3, the electronic device computes a third positive integer number R by performing a modular exponentiation of the first positive integer number P with the computed second integer r such that: R = P^{r} mod m. Even if an attacker retrieves the value of the second integer by a SCA, he will not get any information about the secret key k since r can be seen as a random value.

In a fourth step E'4, the electronic device performs a modular multiplication of the obtained second positive integer number S and the computed third positive integer number R to obtain the modular exponentiation operation result Q = P^{k} mod m. Indeed, S* R = P^{s} * P^{r} =P^{(s+r)} =P^{(s+k-s)} = P^{k} mod m. As in the second step, this multiplication operation is a short operation performed by the processing system of the electronic device which has a much shorter execution time than a full modular exponentiation operation. Therefore, it generates much lower leakage that an attacker could capture by a SCA. And even if an attacker successfully retrieved S and/or R, he would not get the knowledge of the secret key k.

Finally, in a fifth step E'5, the electronic device performs the cryptographic process using the modular exponentiation operation result Q.

As a result, the method described above enables to compute securely an ECC scalar multiplication or a modular exponentiation operation, without exposing to side channel attacks, either vertical or horizontal, of any order the secret key used as scalar or exponent. Even if an attacker performed a successful SCA attack on a step of the methods, he would only recover values such as the scalar r or the integer values S or R which would give him no information about the secret key k.

## Claims

1. A method for securing against side channel attacks an execution of a cryptographic process comprising an elliptic curve scalar multiplication operation of a secret key k with a first point P of an elliptic curve computing a scalar multiplication operation result Q = k.P in an electronic device, with k a scalar,
said method being performed by said electronic device (100) comprising a processing system (101) and a memory (105) storing at least one pre-computed point of said elliptic curve (S1, ..., Sn) such that Si=si.P, si a scalar, and comprising, when said cryptographic process is executed, for computing securely said scalar multiplication operation result Q = k.P :
- obtaining (E1), from said at least one stored pre-computed point of said elliptic curve (S1, ..., Sn), a second point of said elliptic curve S such that S=s.P with s a first scalar,
- computing (E2), via said processing system, a second scalar r by subtracting said first scalar s from said secret key k ,
- computing (E3), via said processing system, a third point of said elliptic curve R by multiplying said computed second scalar r with said first point P such that : R = r.P,
- performing (E4), via said processing system, a point addition of said obtained second point S and said computed third point R to obtain the scalar multiplication operation result Q = k.P and,
- performing (E5), via said processing system, said cryptographic process using said obtained scalar multiplication operation result.

2. The method of claim 1, wherein said at least one pre-computed point of said elliptic curve (S1, ..., Sn) are random and specific to the electronic device.

3. A method for securing against side channel attacks an execution of a cryptographic process comprising a modular exponentiation operation of a base P with a secret key k modulo a value m computing a modular exponentiation operation result Q = P^{k} mod m in an electronic device (100), k being an integer, P being a first positive integer number,
said method being performed by said electronic device (100) comprising a processing system (101) and a memory (105) storing at least one pre-computed positive integer number (S1, ..., Sn) such that Si= P^{si} mod m, si an integer, and comprising, when said cryptographic process is executed, for computing securely said modular exponentiation operation result Q:
- obtaining (E'1), from said at least one stored pre-computed positive integer number (S1, ..., Sn), a second positive integer number S such that S= P^{s} mod m with s a first integer,
- computing (E'2), via said processing system, a second integer r by subtracting said first integer s from said secret key k (r = k-s mod phi(m)), where phi is Euler's totient function,
- computing (E'3), via said processing system, a third positive integer number R by performing a modular exponentiation of said first positive integer number P with said computed second integer r with such that: R = P^{r} mod m,
- performing (E'4), via said processing system, a modular multiplication of said obtained second positive integer number S and said computed third positive integer number R to obtain the modular exponentiation operation result Q = P^{k} mod m and,
- performing (E'5), via said processing system, said cryptographic process using said obtained modular exponentiation operation result.

4. The method of claim 3, wherein said at least one pre-computed positive integer number (S1, ..., Sn) are random and specific to the electronic device.

5. The method of claim 1 or 2, wherein obtaining said second point (E1) comprises combining linearly a plurality of pre-computed points of said elliptic curve using random coefficients.

6. The method of claim 3 or 4, wherein obtaining said second positive integer number (E'1) comprises multiplying a plurality of pre-computed positive integer numbers, each exponentiated by a random coefficient.

7. The method of claim 5 or 6, wherein said used random coefficients are multiples of two.

8. The method of any one of claims 1 to 7, wherein said cryptographic process is among Signature, key generation, and key Exchange.

9. A computer program product directly loadable into the memory of at least one computer, comprising software code instructions for performing the steps of any of claims 1 to 8, when said product is run on the computer.

10. A non-transitory computer-readable storage medium adapted to store one or more instructions for securing against side channel attacks an execution of a cryptographic process comprising an elliptic curve scalar multiplication operation of a secret key k with a first point P of an elliptic curve computing a scalar multiplication operation result Q = k.P, with k a scalar, in an electronic device comprising a processing system and a memory storing at least one pre-computed point of said elliptic curve (S1, ..., Sn) such that Si=si.P, si a scalar, the instructions which when executed by said processing system for computing securely said scalar multiplication operation result Q = k.P cause the processing system to :
- obtain, from said at least one stored pre-computed point of said elliptic curve (S1, ..., Sn), a second point of said elliptic curve S such that S=s.P with s a first scalar,
- compute a second scalar r by subtracting said first scalar s from said secret key k,
- compute a third point of said elliptic curve R by multiplying said computed second scalar r with said first point P such that: R = r.P,
- perform a point addition of said obtained second point S and said computed third point R to obtain the scalar multiplication operation result Q = k.P and,
- perform said cryptographic process using said obtained scalar multiplication operation result.

11. A non-transitory computer-readable storage medium adapted to store one or more instructions for securing against side channel attacks an execution of a cryptographic process comprising a modular exponentiation operation of a base P with a secret key k modulo a value m computing a modular exponentiation operation result Q = P^{k} mod m in an electronic device, k being an integer, P being a first positive integer number, in an electronic device comprising a processing system and a memory storing at least one pre-computed positive integer number (S1, ..., Sn) such that Si= P^{si} mod m, si an integer, the instructions which when executed by said processing system for computing securely said modular exponentiation operation result Q cause the processing system to :
- obtain, from said at least one stored pre-computed positive integer number (S1, ..., Sn), a second positive integer number S such that S= P^{s} mod m with s a first integer,
- compute a second integer r by subtracting said first integer s from said secret key k (r = k-s mod phi(m)), where phi is the Euler's totient function,
- compute a third positive integer number R by performing a modular exponentiation of said first positive integer number P with said computed second integer r with such that: R = P^{r} mod m,
- perform a modular multiplication of said obtained second positive integer number S and said computed third positive integer number R to obtain the modular exponentiation operation result Q = P^{k} mod m and,
- perform said cryptographic process using said obtained modular exponentiation operation result.

12. An electronic device (100) for securing against side channel attacks an execution of a cryptographic process comprising an elliptic curve scalar multiplication operation of a secret key k with a first point P of an elliptic curve computing a scalar multiplication operation result Q = k.P, with k a scalar, comprising :
- a memory (105) storing at least one pre-computed point of said elliptic curve (S1, ..., Sn) such that Si=si.P with si a scalar,
- a processing system (101) communicatively coupled to the memory adapted to compute securely said scalar multiplication operation result Q = k.P, when said cryptographic process is executed, by:
∘ obtaining a second point of said elliptic curve S such that S=s.P with s a first scalar from said at least one stored pre-computed point of said elliptic curve (S1, ..., Sn),
∘ computing a second scalar r by subtracting said first scalar s from said secret key k,
∘ computing a third point of said elliptic curve R by multiplying said computed second scalar r with said first point P such that: R = r.P,
∘ performing a point addition of said obtained second point S and said computed third point R to obtain the scalar multiplication operation result Q = k.P and,
∘ performing said cryptographic process using said obtained scalar multiplication operation result.

13. An electronic device (100) for securing against side channel attacks an execution of a cryptographic process comprising a modular exponentiation operation of a base P with a secret key k modulo a value m computing a modular exponentiation operation result Q = P^{k} mod m, with k an integer, comprising:
- a memory (105) storing at least one pre-computed positive integer number (S1, ..., Sn) such that Si= P^{si} mod m, si an integer,
- a processing system (101) communicatively coupled to the memory adapted to compute securely said modular exponentiation operation result Q, when said cryptographic process is executed, by:
∘ obtaining, from said at least one stored pre-computed positive integer number (S1, ..., Sn), a second positive integer number S such that S= P^{s} mod m with s a first integer,
∘ computing a second integer r by subtracting said first integer s from said secret key k (r = k-s mod phi(m)), where phi is Euler's totient function,
∘ computing a third positive integer number R by performing a modular exponentiation of said first positive integer number P with said computed second integer r with such that: R = P^{r} mod m,
∘ performing a modular multiplication of said obtained second positive integer number S and said computed third positive integer number R to obtain the modular exponentiation operation result Q = P^{k} mod m and,
∘ performing said cryptographic process using said obtained modular exponentiation operation result.
